Europäisches Patentamt

European Patent Office

Office européen des brevets

(11) Veröffentlichungsnummer: **0 400 251**
**A1**

## (12) EUROPÄISCHE PATENTANMELDUNG

(21) Anmeldenummer: **89730132.1**

(22) Anmeldetag: **30.05.89**

(51) Int. Cl.⁵: **H04N 1/38**

(43) Veröffentlichungstag der Anmeldung:
**05.12.90 Patentblatt 90/49**

(84) Benannte Vertragsstaaten:
**AT BE CH ES FR GB GR IT LI LU NL SE**

(71) Anmelder: **Siemens Aktiengesellschaft**
**Wittelsbacherplatz 2**
**D-8000 München 2(DE)**

(72) Erfinder: **Berndt, Ernst-Ulrich, Dr.rer.nat.**
**Glasgower Strasse 29**
**D-1000 Berlin 65(DE)**
Erfinder: **Hamann, Peter, Dipl.-Ing.**
**Gotthardstrasse 22**
**D-1000 Berlin 51(DE)**
Erfinder: **Scheer, Udo, Dr.rer.nat.**
**Dahlemer Weg 128**
**D-1000 Berlin 37(DE)**
Erfinder: **Schnell, Walter**
**Sächsische Strasse 6/2**
**D-1000 Berlin 15(DE)**

(54) **Bildverarbeitungsverfahren.**

(57) Es ist bekannt, zur Verarbeitung von Bildpunktinformationen lediglich eines Bildausschnittes einer Bildvorlage diese zunächst mittels einer optoelektronischen Abtasteinrichtung bildpunktweise abzutasten, die so erhaltenen Bildpunktinformationen abzuspeichern und auf einem Bildschirmgerät zur Anzeige zu bringen, um mit Hilfe einer Zeigersteuereinrichtung auf dem Bildschirm den gewünschten Bildausschnitt festzulegen, dessen Bildpunktinformationen anschließend weiterverarbeitet werden.

Um ein Bildschirmsichtgerät mit einer Zeigersteuereinrichtung oder ein sonstiges spezielles Koordinateneingabegerät zur Festlegung des Bildausschnittes (4) entbehrlich zu machen, werden Markierungen (2,3) mit einem zwischen den Schwarz- und Weißwerten der Bildpunktinformationen (5) liegenden Helligkeitswert (HM) auf der Bildvorlage (1) zur Festlegung des Bildausschnittes (4) angebracht und bei der Abtastung der Bildvorlage (1) über zwei Empfindlichkeitsschwellen (S1 und S2) über und unter dem Helligkeitswert (HM) von den übrigen Bildpunktinformationen unterschieden.

FIG 1

FIG 2

## Bildverarbeitungsverfahren

Die Erfindung betrifft ein Bildverarbeitungsverfahren, bei dem zur Verarbeitung von schwarz-/weißen Bildpunktinformationen lediglich eines oder mehrerer Bildausschnitte einer Bildvorlage diese mit einer optoelektronischen Abtasteinrichtung bildpunktweise abgetastet wird und in Abhängigkeit von vorgebbaren, die Lage jedes Bildausschnittes innerhalb der Bildvorlage definierenden Bildpunktkoordinaten die Bildpunktinformationen des Bildausschnittes zur Weiterverarbeitung ausgewählt werden.

Bei einem derartigen, aus der DE-OS 31 21 503 bekannten Bildverarbeitungsverfahren wird zur Verarbeitung von Bildpunktinformationen lediglich eines Bildausschnittes einer Bildvorlage zunächst die gesamte Bildvorlage mittels einer optoelektronischen Abtasteinrichtung bildpunktweise abgetastet, wobei die so erhaltenen Bildpunktinformationen in einer Speichereinrichtung abgespeichert werden. Daraufhin wird die abgetastete Bildvorlage durch Ausgabe der abgespeicherten Bildpunktinformationen auf einem Bildschirmsichtgerät zur Anzeige gebracht. Mit Hilfe einer Zeiger-(Cursor)-Steuereinrichtung werden auf dem Bildschirm einzelne Bildpunktkoordinaten festgelegt, die jeweils Eckpunkte des gewünschten Bildausschnittes bezeichnen. Mittels einer elektronischen Steuereinrichtung werden dann in Abhängigkeit von den festgelegten Bildpunktkoordinaten der Eckpunkte alle in der Speichereinrichtung abgelegten Bildpunktinformationen des Bildausschnittes zur weiteren Verarbeitung, wie zum Beispiel Vergrößerung, Verkleinerung oder Lageverschiebung des Bildausschnittes ausgewählt.

Die Festlegung der Eckpunkte des Bildausschnittes kann auch -wie beispielsweise aus der DE-OS 31 41 450 bekannt - mit Hilfe eines Digitizer-Tableaus als Koordinateneingabegerät erfolgen.

Der Erfindung liegt die Aufgabe zugrunde, die Verarbeitung von Bildpunktinformationen beliebig festlegbarer Bildausschnitte einer Bildvorlage zu ermöglichen, ohne daß hierzu ein Bildschirmsichtgerät oder ein sonstiges spezielles Koordinateneingabegerät erforderlich ist.

Gemäß der Erfindung wird die Aufgabe dadurch gelöst, daß bei dem Bildverarbeitungsverfahren der eingangs angegebenen Art zur Ermittlung der vorgebbaren Bildpunktkoordinaten die Bildvorlage gemeinsam mit einer den Bildausschnitt auf der Bildvorlage kennzeichnenden und einen Helligkeitswert zwischen den Schwarz-und Weißwerten der Bildpunktinformationen aufweisenden Markierung mit einer oberhalb dieses Helligkeitswertes liegenden Empfindlichkeitsschwelle und mit einer unterhalb dieses Helligkeitswertes liegenden Empfindlichkeitsschwelle abgetastet wird und daß die bezüglich ihrer Helligkeitswerte zwischen den beiden Empfindlichkeitsschwellen liegenden Abtastwerte der Markierung von den über der höheren Empfindlichkeitsschwelle und unter der niedrigeren Empfindlichkeitsschwelle liegenden Abtastwerten der Bildpunktinformationen unterschieden werden.

Bei dem erfindungsgemäßen Bildverarbeitungsverfahren dient die optoelektronische Abtasteinrichtung in vorteilhafter Weise zusätzlich zur Bildvorlagenabtastung zugleich auch zur Erfassung der den gewünschten Bildausschnitt bezeichnenden Markierungen, so daß ein spezielles Gerät zur Festlegung des Bildausschnittes nicht erforderlich ist. Die Markierung der Bildausschnitte kann in einfacher Weise direkt auf der Bildvorlage mit Hilfe eines üblicherweise zur Kennzeichnung oder Hervorhebung von Textstellen benutzten Markierungsstiftes (Marker-Stiftes) erfolgen, wobei sich die Markierung auch mit den Bildpunkten innerhalb des gewünschten Bildausschnittes überlagern kann, ohne daß dabei diese Bildpunktinformationen für die die Bildvorlagenabtastung verlorengehen. Darüber hinaus besteht auch die Möglichkeit, die Markierungen in Form von teiltransparenten Klebeetiketten auf der Bildvorlage aufzubringen oder die Bildvorlage zusammen mit einer aufgelegten, die Markierungen enthaltenden Folie abzutasten.

Bei einer nur einen einzigen Abtastvorgang erfordernden Variante des erfindungsgemäßen Verfahrens wird die Bildvorlage mit der Markierung unter Erzeugung von helligkeitsproportionalen Abtastwerten abgetastet, wobei die bezüglich ihrer Helligkeitswerte jeweils zwischen den beiden Empfindlichkeitsschwellen liegenden Abtastwerte zur Unterscheidung der Markierung von den Bildpunktinformationen herangezogen werden.

Entsprechend einer weiteren Verfahrensvariante, die in vorteilhafter Weise auf eine reine Schwarz-/Weiß-Abtastung ohne Berücksichtigung dazwischenliegender Helligkeitswerte beschränkt werden kann, ist vorgesehen, daß die Bildvorlage mit den Markierungen einmal mit der höheren Empfindlichkeitsschwelle und ein anderes Mal mit der niedrigeren Empfindlichkeitsschwelle abgetastet wird und daß durch einen bildpunktweisen Vergleich der bei beiden Abtastvorgängen erhaltenen Abtastwerte die Markierung von den bei dem Abtastvorgang mit der niedrigeren Empfindlichkeitsschwelle erfaßten Bildpunktinformationen unterschieden wird.

Der Rechenaufwand zur Ermittlung der Lage der Markierungen wird in vorteilhafter Weise dadurch reduziert, daß bei einem zeilenweisen Abtasten der Bildvorlage die durch den Vergleich der bei beiden Abtastvorgängen erhaltenen Abtastwerte erzeugten Vergleichswerte zeilen- und spaltenweise aufsummiert werden. Die gesuchten Zeilen- und Spaltenkoordinaten der einzelnen Markierungen ergeben sich dann aus besonders hohen und/oder charakteristisch verteilten Summenwerten.

Da bei dem die Markierungen erfassenden Abtastvorgang mit der höheren Empfindlichkeitsschwelle nicht die Anforderungen an die Abtastauflösungen bestehen, wie bei der Erfassung der Bildpunktinformationen, wird die Bildvorlage bei dem Abtastvorgang mit der höheren Empfindlichkeitsschwelle in einem gröberen Abtastraster und damit schneller abgetastet, als bei dem Abtastvorgang mit der niedrigeren Empfindlichkeitsschwelle.

Für den Fall, daß die Bildvorlage neben ausschließlich schwarz-/weißen Bildpunktinformationen weitere Bildpunktinformationen mit unterschiedlichen Helligkeitswerten, wie z. B. Fotos oder Farben aufweist, wird bei dem erfindungsgemäßen Verfahren eine sichere Markierungserkennung dadurch erreicht, daß die durch den Vergleich der bei beiden Abtastvorgängen erhaltenen Abtastwerte erzeugten Vergleichswerte in einem Mustererkennungsprozeß nach Bereichen mit bildpunktweise zusammenhängenden übereinstimmenden Vergleichswerten abgesucht werden und daß zur Erkennung der Markierungen die Formen der Bereiche mit vorgegebenen charakteristischen Formen für die Markierungen verglichen werden. Im Vergleich zu einer ausschließlich auf der Mustererkennung beruhenden Erfassung der Markierungen wird bei dem erfindungsgemäßen Verfahren die in der Regel sehr rechenintensive Mustererkennung lediglich auf diejenigen Bildbereiche der Bildvorlage beschränkt, deren Bildpunktinformationen zwischen den beiden Empfindlichkeitsschwellen liegende Helligkeitswerte aufweisen.

Zur Erläuterung der Erfindung wird im folgenden auf die Figuren der Zeichnung Bezug genommen. Im einzelnen zeigen

Figur 1 ein Beispiel für die Markierung eines Bildausschnittes nach dem erfindungsgemäßen Verfahren auf einer abzutastenden Bildvorlage,

Figur 2 die Helligkeitswertverteilung der Bildpunktinformationen entlang der Figur 1 eingezeichneten Zeile mit unterschiedlichen Empfindlichkeitsschwellen für deren Abtastung,

Figur 3 die beim Abtasten der Bildvorlage nach Figur 1 mit den unterschiedlichen Empfindlichkeitsschwellen nach Figur 2 bildpunktweise erhaltenen Abtastwerte und deren vergleichende Verknüpfung, die

Figuren 4, 5, 6 weitere verschiedene Beispiele für eine Markierung des Bildausschnittes und

Figur 7 ein Ausführungsbeispiel für eine Abtasteinrichtung zur Durchführung des erfindungsgemäßen Bildverarbeitungsverfahrens.

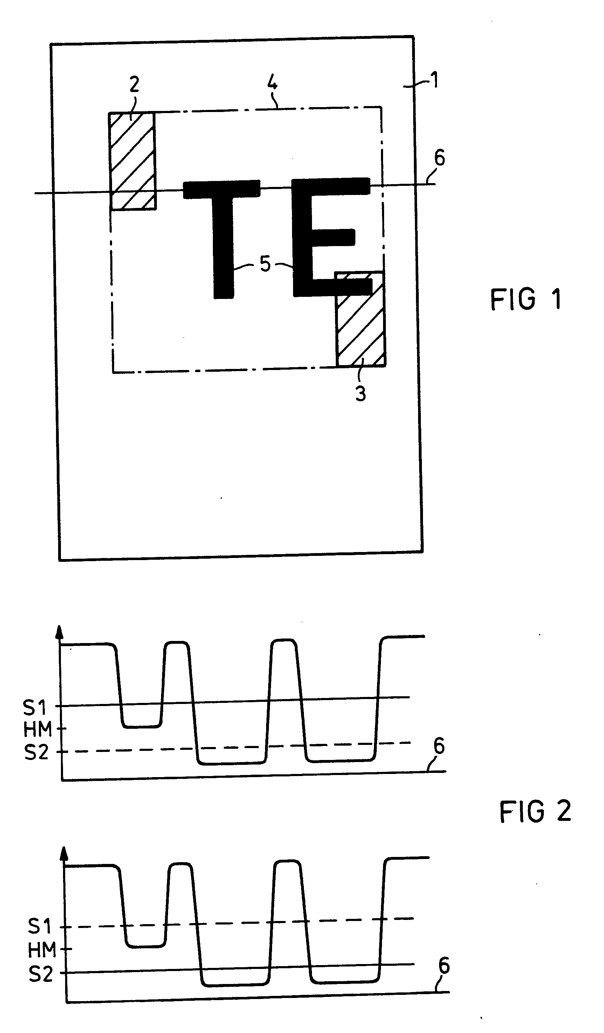

Figur 1 zeigt eine Bildvorlage 1, auf der durch zwei Markierungen 2 und 3 ein rechteckiger, hier durch eine strichpunktierte Umrandung gekennzeichneter Bildausschnitt 4 in der Weise festgelegt ist, daß beide Markierungen 2 und 3 einander diagonal gegenüberliegende Ecken des Bildausschnittes 4 bezeichnen. Die Bildvorlage 1 enthält schwarz-/weiße Bildpunktinformationen 5, beispielsweise einen Text, von dem hier aus Gründen der besseren Darstellbarkeit lediglich zwei Buchstaben "T" und "E" überdimensional groß dargestellt sind; die tatsächlichen Größenverhältnisse entsprechen denen bei einem mit einer Schreibmaschine beschriebenen Blatt Papier. Die Markierungen 2 und 3 weisen einen Helligkeitswert auf, der zwischen den Schwarz- und Weißwerten der Bildpunktinformationen liegt und hier durch eine Schraffur angedeutet ist. Die Markierungen 2 und 3 können beispielsweise mittels eines üblicherweise zur Unterstreichung und Hervorhebung von Textstellen vorgesehenen Markierungsstiftes (sog. Marker-Stift oder Fluoreszenzstift) auf der Bildvorlage 1 aufgebracht werden. Alternativ hierzu kann es sich bei den Markierungen 2 und 3 auch um teiltransparente Klebeetiketten oder teiltransparente Bereiche einer auf der Bildvorlage 1 au fliegenden Klarsichtfolie handeln.

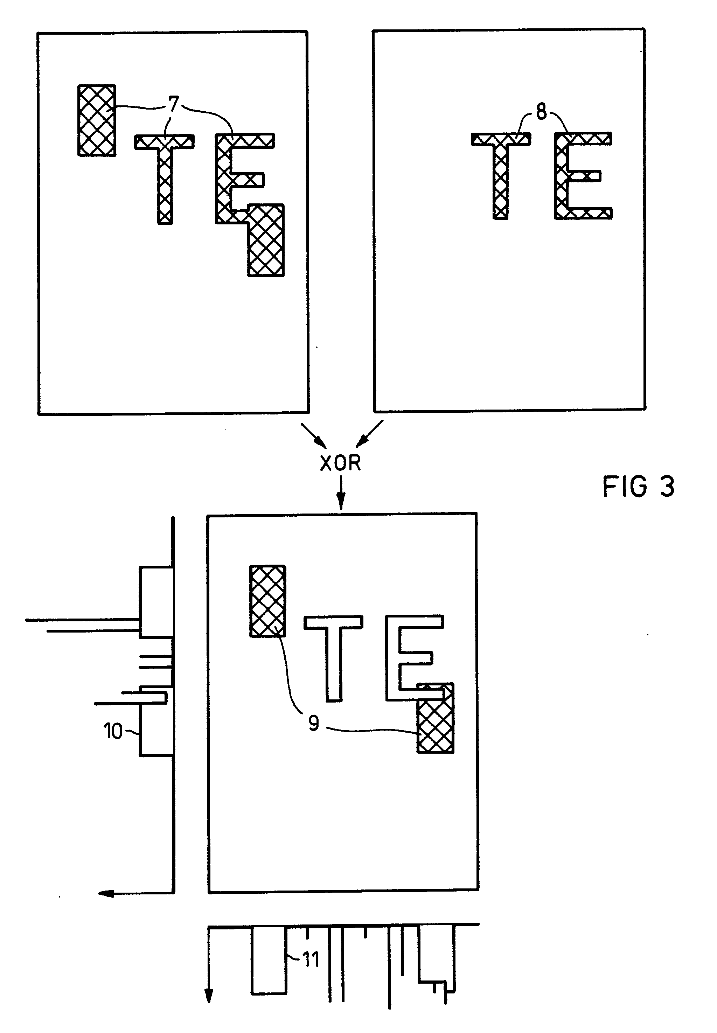

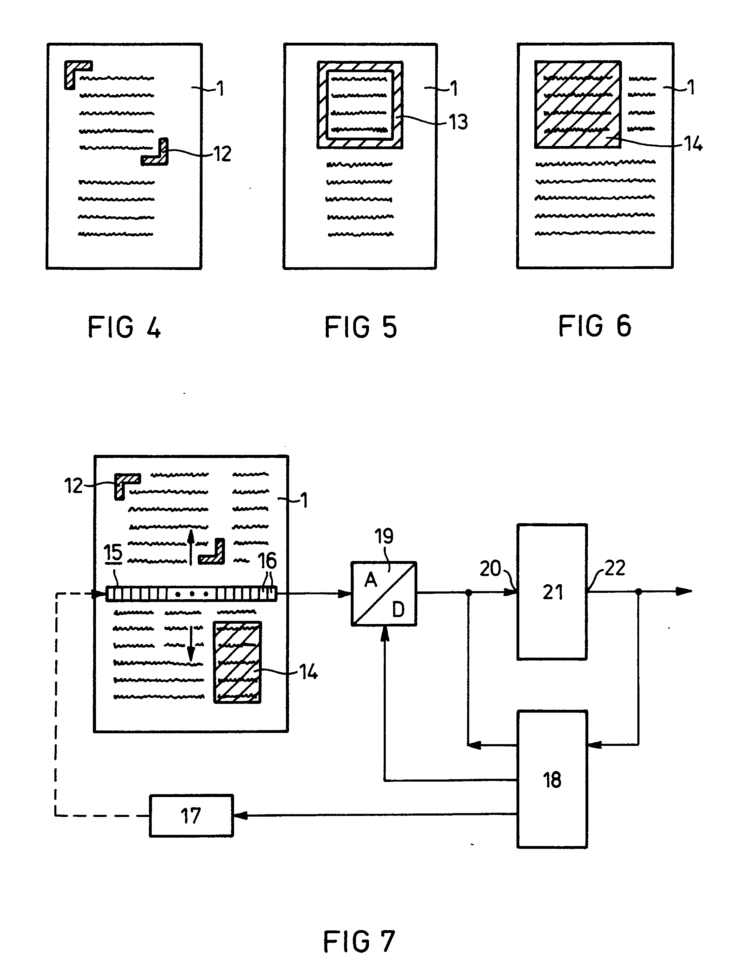

Figur 2 zeigt die Verteilung der Helligkeitswerte der Bildpunktinformationen entlang der in Figur 1 mit 6 bezeichneten Zeile. Um die den Bildausschnitt 4 kennzeichnenden Markierungen 2 und 3 von den übrigen Bildpunktinformationen 5 unterscheiden zu können, wird die Bildvorlage 1 mittels einer untenstehend anhand von Figur 7 näher erläuterten optoelektronischen Abtasteinrichtung einmal mit einer oberhalb des Helligkeits wertes HM der Markierungen 2 und 3 liegenden Empfindlichkeitsschwelle S1 und ein weiteres Mal mit einer unterhalb dieses Helligkeitswertes HM liegenden Empfindlichkeitsschwelle S2 abgetastet. Wie Figur 3 in der oberen linken Bildhälfte zeigt, liefern beim Abtasten der Bildvorlage 1 mit der höheren Empfindlichkeitsschwelle S1 sowohl die Markierungen 2 und 3 als auch die eigentlichen schwarzen Bildpunktinformationen 5 schwellenunterschreitende Abtastwerte 7, während entsprechend der Darstellung oben rechts bei der Abtastung der Bildvorlage 1 mit der niedrigeren Empfindlichkeitsschwelle S2 ausschließlich die schwarzen Bildpunktinformationen 5 schwellenunterschreitende Abtastwerte 8 liefern. Die in den beiden Abtastvorgängen erhaltenen Abtastwerte 7 und 8 werden bildpunktweise miteinander auf Antivalenz (XOR) verglichen, so daß als Ergebnis die in der unteren Bildhälfte von Figur 3 bzgl. ihrer bildpunktmäßigen Verteilung dargestellten Vergleichswerte 9 erhalten werden. Die Vergleichswerte 9 bezeichnen außer den Markierungen 2 und 3 auch die Umrißlinien der Buchstaben "T" und "E", was darauf zurückzuführen ist, daß - wie Figur 2 zeigt - Schwarz-/Weiß-Übergänge von der optoelektronischen Abtasteinrichtung als unscharfe, Grauwerte aufweisende Übergänge registriert werden, die die unterschiedlichen Empfindlichkeitsschwellen S1 und S2 entlang der Zeile 6 an unterschiedlichen Stellen überschneiden. Zur Ermittlung der Lage der Markierungen 2 und 3 ist es nicht erforderlich, die Vergleichswerte 9 bildpunktweise auszuwerten; es genügt vielmehr, die Vergleichswerte 9 zeilen- und spaltenweise aufzusummieren, so daß sich die gesuchten Zeilen-und Spaltenkoordinaten der Markierungen 2 und 3 aus besonders hohen und/oder charakteristisch verteilten Zahlenwerten in der Summenspalte 10 und der Summenzeile 11 ergeben.

Für den Fall, daß die Bildvorlage 1 außer rein schwarz-weißen Bildpunktinformationen auch Bildpunktinformationen unterschiedlicher Helligkeitswerte, wie z. B. Fotos aufweist, ist es erforderlich, diese Bildpunktinformationen von den Markierungen unterscheiden zu können. Wie Figur 2 erkennen läßt, ist die Unterscheidbarkeit von Markierungen und sonstigen helligkeitsabgestuften Bildpunktinformationen um so besser, je definierter der Helligkeitswert HM der Markierungen 2 und 3 ist und je dichter dementsprechend die Empfindlichkeitsschwellen S1 und S2 zueinander liegen. Für die übrigen Bildpunktinformationen mit ebenso wie die Markierungen 2 und 3 zwischen den Empfindlichkeitsschwellen S1 und S2 liegenden Helligkeitswerten ist eine Unterscheidung gegenüber den Markierungen 2 und 3 durch eine Mustererkennung möglich, indem die durch den Vergleich der bei beiden Abtastvorgängen erhaltenen Abtastwerte 7 und 8 erzeugten Vergleichswerte 9 nach bildpunktweise zusammenhängenden Bereichen, wie die in Figur 3 kreuzschraffierten Bereiche, abgesucht werden und die Formen der so gefundenen Bereiche mit vorgegebenen charakteristischen Formen für die Markierungen 2 und 3 verglichen werden.

Die Figuren 4, 5 und 6 zeigen weitere Möglichkeiten für die Markierung des Bildausschnittes auf der Bildvorlage 1. So kann der gewünschte Bildausschnitt durch rechtwinklige Markierungen 12 an seinen Ecken (Figur 4) durch Umrandung 13 (Figur 5) oder durch Unterlegung mit einer Markierung 14 (Figur 6) gekennzeichnet werden.

Figur 7 zeigt ein Ausführungsbeispiel für eine optoelektronische Abtasteinrichtung zur Durchführung des erfindungsgemäßen Bildverarbeitungsverfahrens. Diese enthält eine Abtastzeile 15 mit einer Vielzahl in Zeilenrichtung nebeneinanderliegender Sensoren 16. Die Abtastzeile 15 ist quer zur Zeilenrichtung über die Bildvorlage 1 hinwegführbar. Dazu wird die Abtastzeile 15 durch einen Schrittmotor 17 in Abhängigkeit von Bewegungssteuerdaten angetrieben, die dem Schrittmotor 17 von einer Steuereinrichtung 18 zugeführt werden. Die Sensoren 16 der Abtastzeile 15 sind ausgangsseitig an einen Analog/Digital-Umsetzer 19 angeschlossen, dessen Empfindlichkeitsschwelle durch die Steuereinrichtung 18 auf die in Figur 2 gezeigten Werte S1 und S2 einstellbar ist. Der Analog/Digital-Umsetzer 19 ist ausgangsseitig mit dem Eingang 20 einer Speichereinrichtung 21 verbunden, an deren Ausgang 22 die Abtastwerte zur weiteren Verarbeitung entnommen werden können. Der Ausgang 22 der Speichereinrichtung 21 ist ferner eingangsseitig mit der Steuereinrichtung 18 verbunden, die darüber hinaus ausgangsseitig mit dem Eingang 20 der Speichereinrichtung 21 in Verbindung steht.

Zur Verarbeitung von Bildpunktinformationen lediglich eines oder mehrerer durch die Markierungen 12 und 14 gekennzeichneten Bildausschnitte wird die Bildvorlage 1 durch die Abtastzeile 15 ein erstes Mal abgetastet, wobei die Empfindlichkeitsschwelle des Analog/Digital-Umsetzers 19 durch die Steuereinrichtung 18 auf den höheren Wert S1 gesetzt ist, so daß neben den Bildpunktinformationen auch die Markierungen 12 und 14 erfaßt werden. Die Abtastung erfolgt dabei vorzugsweise in einem groben Abtastraster und daher relativ schnell. Die erhaltenen Abtastwerte werden in der Speichereinrichtung 21 zwischengespeichert. Für einen zweiten Abtastvorgang wird die Empfindlichkeitsschwelle des Analog/Digital-Umsetzers 19 auf den niedrigeren Wert S2 eingestellt, so daß bei dem zweiten Abtastvorgang nur die eigentlichen Bildpunktinformationen erfaßt werden. Die jetzt erhaltenen Abtastwerte werden mit den zuvor erhaltenen abgespeicherten Abtastwerten durch die Steuereinrichtung 18 auf Ambivalenz miteinander verglichen, um die Abtastwerte der Markierungen 12 und 14 auszusondern und daraus die Lage der gewünschten Bildausschnitte zu ermitteln.

Die Bildpunktinformationen und Markierungen 12 und 14 der Bildvorlage 1 lassen sich auch in einem einzigen Abtastvorgang erfassen und voneinander unterscheiden. Dazu werden mittels des Analog/Digital-Umsetzers 19 helligkeitsproportionale Abtastwerte beispielsweise in Helligkeitsabstufungen von 0 bis 255 erzeugt. Zur Unterscheidung der von den Markierungen 12 und 14 stammenden Abtastwerte von den übrigen Abtastwerten wird mittels einer Speichertabelle allen Abtastwerten, die zwischen einer höheren Empfindlichkeitsschwelle S1, beispielsweise mit dem Wert 128, und einer niedrigeren Empfindlichkeitsschwelle S2, beispielsweise mit dem Wert 64 liegen, eine logische "1" und allen übrigen Werten eine logische "0" zugeordnet.

**Ansprüche**

1. Bildverarbeitungsverfahren, bei dem zur Verarbeitung von schwarz-/weißen Bildpunktinformationen lediglich eines oder mehrerer Bildausschnitte einer Bildvorlage diese mit einer optoelektronischen Abtasteinrichtung bildpunktweise abgetastet wird und in Abhängigkeit von vorgebbaren, die Lage jedes Bildausschnittes innerhalb der Bildvorlage definierenden Bildpunktkoordinaten die Bildpunktinformationen des Bildausschnittes zur Weiterverarbeitung ausgewählt werden,
**dadurch gekennzeichnet, daß**
zur Ermittlung der vorgebbaren Bildpunktkoordinaten die Bildvorlage (1) gemeinsam mit einer den Bildausschnitt (4) auf der Bildvorlage (1) kennzeichnenden und einen Helligkeitswert (HM) zwischen den Schwarz- und Weißwerten der Bildpunktinformationen (5) aufweisenden Markierung (2,3;12,13,14) mit einer oberhalb dieses Helligkeitswertes (HM) liegenden Empfindlichkeitsschwelle (S1) und mit einer unterhalb dieses Helligkeitswertes (HM) liegenden Empfindlichkeitsschwelle (S2) abgetastet wird und daß die bezüglich ihrer Helligkeitswerte (HM) zwischen den beiden Empfindlichkeitsschwellen (S1 und S2) liegenden Abtastwerte der Markierung (2,3;12,13,14) von den über der höheren Empfindlichkeitsschwelle (S1) und unter der niedrigeren Empfindlichkeitsschwelle (S2) liegenden Abtastwerten (7,8) der Bildpunktinformationen (5) unterschieden werden.

2. Bildverarbeitungsverfahren nach Anspruch 1,
**dadurch gekennzeichnet, daß**
die Bildvorlage (1) mit der Markierung (2,3;12,13,14) unter Erzeugung von helligkeitsproportionalen Abtastwerten abgetastet wird und daß die bezüglich ihrer zugeordnete Helligkeitswerte jeweils zwischen den beiden Empfindlichkeitsschwellen (S1 und S2) liegenden Abtastwerte zur Unterscheidung der Markierung (2,3; 12,13,14) von den Bildpunktinformationen (5) herangezogen werden.

3. Bildverarbeitungsverfahren nach Anspruch 1,
**dadurch gekennzeichnet, daß**
die Bildvorlage (1) mit der Markierung (2,3;12,13,14) einmal mit der höheren Empfindlichkeitsschwelle (S1) und ein anderes Mal mit der niedrigeren Empfindlichkeitsschwelle (S2) abgetastet wird und daß durch einen bildpunktweisen Vergleich der bei beiden Abtastvorgängen erhaltenen Abtastwerte (7,8) die Markierung (2,3;12,13,14) von den bei dem Abtastvorgang mit der niedrigeren Empfindlichkeitsschwelle (S2) erfaßten Bildpunktinformationen (5) unterschieden wird.

4. Bildverarbeitungsverfahren nach Anspruch 3,
**dadurch gekennzeichnet, daß**
bei einem zeilenweisen Abtasten der Bildvorlage (1) die durch den Vergleich der bei beiden Abtastvorgängen erhaltenen Abtastwerte (7,8) erzeugten Vergleichswerte (9) zeilen- und spaltenweise aufsummiert werden.

5. Bildverarbeitungsverfahren nach Anspruch 3 oder 4,
**dadurch gekennzeichnet, daß**
die Bildvorlage (1) bei dem Abtastvorgang mit der höheren Empfindlichkeitsschwelle (S1) in einem gröberen Abtastraster abgetastet wird als bei dem Abtastvorgang mit der niedrigeren Empfindlichkeitsschwelle (S2).

6. Bildverarbeitungsverfahren nach einem der vorangehenden Ansprüche,
**dadurch gekennzeichnet, daß**
die durch den Vergleich der bei beiden Abtastvorgängen erhaltenen Abtastwerte (7,8) erzeugten Vergleichswerte (9) in einem Mustererkennungsprozeß nach Bereichen mit bildpunktweise zusammenhängenden übereinstimmenden Vergleichs werten (9) abgesucht werden und daß zur Erkennung der Markierungen (2,3;12,13,14) die Formen der Bereiche mit vorgegebenen charakteristischen Formen für die Markierungen (2,3;12,13,14) verglichen werden.

89 P 4074

FIG 1

FIG 2

89 P 4074

FIG 3

89 P 4074

**FIG 4**

**FIG 5**

**FIG 6**

**FIG 7**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | SYSTEMS & COMPUTERS IN JAPAN, vol. 18, no. 8, August 1987, Seiten 77-87, Scripta Technica, Inc., Silver Spring, Maryland, US; M. HASE et al.: "A method for extracting marked regions from document images" * Insgesamt * --- | 1-4 | H 04 N 1/38 |
| A | GB-A-2 203 014 (FUJI XEROX) ----- | | |

**RECHERCHIERTE SACHGEBIETE (Int. Cl.5)**

H 04 N

Der vorliegende Recherchenbericht wurde für alle Patentansprüche erstellt

| Recherchenort | Abschlußdatum der Recherche | Prüfer |
|---|---|---|
| DEN HAAG | 23-01-1990 | ISA S. |